# EUROPÄISCHE PATENTANMELDUNG

(11) **EP 4 361 432 A1**
(43) Veröffentlichungstag der Anmeldung: **01.05.2024**
(21) Anmeldenummer: 23196753.0
(22) Anmeldetag: 12.09.2023
(51) Int. Cl.: F03D 1/06, F03D 80/50, F03D 80/70

(54) **VERFAHREN ZUR INSTANDHALTUNG UND/ODER INSTANDSETZUNG EINER WINDKRAFTANLAGE**

(30) Priorität: 24.10.2022 DE 102022128002
(71) Anmelder: Deutsche Windtechnik X-Service GmbH, 49086 Osnabrück (DE)
(72) Erfinder: Matysik, Silvio, 41836 Hückelhoven (DE); Blum, Simon, 47877 Willich (DE)
(74) Vertreter: advotec.

(57) **Zusammenfassung**

Die Erfindung betrifft ein Verfahren zur Instandhaltung und/oder Instandsetzung einer Windkraftanlage, wobei ein Rotor der Windkraftanlage mit einer ein Rotorblattlager (10) aufweisenden Rotornabe auf einem Turm der Windkraftanlage angeordnet ist, wobei ein Ringelement (11) des Rotorblattlagers bezüglich eines bezüglich der Rotornabe fest stehenden weiteren Ringelements (13) des Rotorblattlagers drehbar ist, wobei ein Rotorblatt des Rotors an dem Ringelement befestigt ist, wobei ein Anstellwinkel des Rotorblatts bezüglich der Rotornabe durch eine Drehung des Ringelements verstellbar ist, wobei zumindest ein verschlissener Zahn (14) einer Verzahnung (12) des Ringelements durch Schweißen bearbeitet wird, bis der Zahn in einen vorbestimmten, vorzugsweise zumindest näherungsweise ursprünglichen, Zustand des Zahns gebracht ist, wobei das Rotorblattlager zumindest bereichsweise, insbesondere das Ringelement in einem Bereich einer Umgebung des Zahns, während des Schweißens unter Verwendung einer Kühlvorrichtung gekühlt wird, wobei die Instandhaltung und/oder Instandsetzung in situ erfolgt.

## Beschreibung

Die Erfindung betrifft ein Verfahren zur Instandhaltung und/oder Instandsetzung einer Windkraftanlage, wobei ein Rotor der Windkraftanlage mit einer ein Rotorblattlager aufweisenden Rotornabe auf einem Turm der Windkraftanlage angeordnet ist, wobei ein Ringelement des Rotorblattlagers bezüglich eines bezüglich der Rotornabe fest stehenden weiteren Ringelements des Rotorblattlagers drehbar ist, wobei ein Rotorblatt des Rotors an dem Ringelement befestigt ist, wobei ein Anstellwinkel des Rotorblatts bezüglich der Rotornabe durch eine Drehung des Ringelements verstellbar ist.

Windkraftanlagen sind aus dem Stand der Technik hinlänglich bekannt. Sie umfassen regelmäßig einen Turm und einen auf dem Turm angeordneten Rotor, welcher seinerseits eine Rotornabe und typischerweise zwei oder drei an der Rotornabe befestigte Rotorblätter umfasst. Um zur Regulierung einer Leistung einer Windkraftanlage einen Anstellwinkel eines Rotorblatts bezüglich der Rotornabe verstellen zu können, umfasst die Rotornabe üblicherweise je Rotorblatt ein als ein Wälzlager ausgebildetes Rotorblattlager, welches ein Ringelement, ein weiteres Ringelement sowie zwischen dem Ringelement und dem weiteren Ringelement angeordnete Wälzkörper umfasst. Dabei ist das Ringelement bezüglich des bezüglich der Rotornabe fest stehenden weiteren Ringelements drehbar, so dass der Anstellwinkel des Rotorblatts bei mit dem Ringelement befestigten Rotorblatt bzw. Rotorblattflansch des Rotorblatts durch eine Drehung des Ringelements verstellbar ist. Zur Ausführung der Drehung weist das Ringelement üblicherweise eine Verzahnung auf, welche mit einer Gegenverzahnung eines Zahnrads einer Getriebeeinrichtung einer Rotorblattverstellvorrichtung der Rotornabe in Eingriff steht, so dass mittels einer Antriebeinrichtung der Rotorblattverstellvorrichtung, wie einem Elektromotor, über das Zahnrad ein Drehmoment auf das Ringelement aufgebracht werden kann, infolgedessen die Drehung des Ringelements bezüglich dem weiteren Ringelement bzw. der Rotornabe erfolgen kann.

Ein Nutzungsbereich der Verzahnung bei einer Windkraftanlage mit einer derartigen Rotorblattverstellung beträgt regelmäßig 90°, wobei die Rotorblätter jeweils in einem Bereich von 0° bis 90° verfahren werden. Als ein Arbeitsbereich wird ein Bereich von 0° bis 5° angesehen. In dem Arbeitsbereich, insbesondere in einer 0°-Position des Arbeitsbereiches, unterliegt die Verzahnung einem erhöhten Verschleiß, welche auf einen verstärkten Abrieb von in dem Arbeitsbereich liegenden Zähnen der Verzahnung infolge einer Mangelschmierung zurückzuführen ist. Die Mangelschmierung ergibt sich insbesondere aus dem Umstand, dass ein auf die Zähne aufgebrachtes Schmiermittel bedingt durch ein permanentes Verfahren der Rotorblätter zunehmend verdrängt wird. Auch bei jeder Umdrehung des Rotors auftretende Wechsellasten, wodurch die Zähne der Verzahnung fortlaufend in eine starke Wechselwirkung mit in diese eingreifenden Zähnen der Gegenverzahnung des Zahnrads der Getriebeeinrichtung der Rotorblattverstellvorrichtung treten, tragen zu einem erhöhten Verschleiß der Verzahnung bzw. der Zähne der Verzahnung bei. Letztlich kann ein verschlissener Zahn auch herausbrechen. Eine infolge des Verschleißes verschlissene bzw. eingelaufene Verzahnung führt bei jeder Umdrehung des Rotors zu massiven Schlägen in dem Rotor, wodurch das Rotorblattlager bzw. ein Inneres des Rotorblattlagers und andere Komponenten der Windkraftanlage bzw. des Rotors beschädigt werden können, was es zu verhindern gilt.

Es ist daher aus der DE 10 2010 062 418 A1 ein Verfahren zur Instandhaltung einer Windkraftanlage bekannt, wobei bei einem Erreichen einer Verschleißgrenze der Zähne bei von dem Ringelement gelöstem Rotorblattflansch eine Drehung des Ringelements bezüglich des Rotorblattflansches vorgenommen wird, so dass noch nicht verschlissene Zähne der Verzahnung in Eingriff mit den Zähnen der Gegenverzahnung gelangen, der Arbeitsbereich nach der Drehung des Ringelements mithin von noch nicht verschlissenen Zähnen der Verzahnung gebildet wird. Dies erfordert eine aufwendige Demontage der Rotorblätter. Ein Auftreten von weiteren Schlägen in dem Rotor kann so zunächst vermieden werden, so dass die Windkraftanlage nach der Durchführung des Verfahrens einen normalen Betrieb fortsetzen kann, bis gegebenenfalls eine erneute derartige Instandsetzung vonnöten ist. Wegen der im Rahmen des vorgenannten Verfahrens zwingend vorzunehmenden Demontage der Rotorblätter ist die Durchführung dieses Verfahrens mit einem erheblichen Aufwand verbunden und kostenintensiv.

Der vorliegenden Erfindung liegt daher die Aufgabe zugrunde, ein Verfahren anzugeben, welches eine vereinfachte und kostengünstige Instandhaltung und/oder Instandsetzung einer Windkraftanlage ermöglicht.

Diese Aufgabe wird durch ein Verfahren mit den Merkmalen des Anspruchs 1 gelöst.

Bei dem erfindungsgemäßen Verfahren zur Instandhaltung und/oder Instandsetzung einer Windkraftanlage ist ein Rotor der Windkraftanlage mit einer ein Rotorblattlager aufweisenden Rotornabe auf einem Turm der Windkraftanlage angeordnet, wobei ein Ringelement des Rotorblattlagers bezüglich eines bezüglich der Rotornabe fest stehenden weiteren Ringelements des Rotorblattlagers drehbar ist, wobei ein Rotorblatt des Rotors an dem Ringelement befestigt ist, wobei ein Anstellwinkel des Rotorblatts bezüglich der Rotornabe durch eine Drehung des Ringelements verstellbar ist, wobei zumindest ein verschlissener Zahn einer Verzahnung des Ringelements durch Schweißen bearbeitet wird, bis der Zahn in einen vorbestimmten, vorzugsweise zumindest näherungsweise ursprünglichen, Zustand des Zahns gebracht ist, wobei das Rotorblattlager zumindest bereichsweise, insbesondere das Ringelement in einem Bereich einer Umgebung des Zahns, während des Schweißens unter Verwendung einer Kühlvorrichtung gekühlt wird, wobei die Instandhaltung und/oder Instandsetzung in situ erfolgt.

Der Begriff "Instandhaltung" bezeichnet insbesondere Maßnahmen, die vor einem Erreichen einer Verschleißgrenze eines Zahns an dem Zahn vorgenommen werden.

Der Begriff "Instandsetzung" bezeichnet insbesondere Maßnahmen, die nach einem Erreichen einer Verschleißgrenze eines Zahns an dem Zahn vorgenommen werden.

Der Begriff "Zustand des Zahns" bezeichnet insbesondere eine geometrische Form des Zahns, ein Schliffbild des Zahns und mechanische Eigenschaften des Zahns, insbesondere eine Härte des Zahns und eine Zugfestigkeit des Zahns.

Der Begriff "ein verschlissener Zahn" bezeichnet einen Abnutzungserscheinungen aufweisenden Zahn, wobei der Zahn eine Verschleißgrenze des Zahns noch nicht erreicht oder aber bereits erreicht haben kann. Auch kann sich dieser Begriff auf einen im Wesentlichen herausgebrochenen Zahn erstrecken.

Erfindungsgemäß ist vorgesehen, zumindest einen verschlissenen Zahn der Verzahnung, vorzugsweise alle verschlissenen Zähne der Verzahnung, zur Instandhaltung bzw. Instandsetzung des Zahns bzw. der Windkraftanlage durch Schweißen zu bearbeiten, bis der Zahn in einen vorbestimmten, vorzugsweise näherungsweise ursprünglichen, Zustand des Zahns gebracht ist. Mit anderen Worten kann ein Aufschweißen des Zahns erfolgen.

Erfindungsgemäß wird das Rotorblattlager zumindest bereichsweise, insbesondere das Ringelement in einem Bereich einer Umgebung des Zahns, während des Schweißens unter Verwendung einer Kühlvorrichtung gekühlt. Dadurch kann ein Wärmestau vermieden werden. Insbesondere kann verhindert werden, dass dem Rotorblattlager benachbarte Bauteile der Windkraftanlage oder das Rotorblattlager selbst, insbesondere gehärtete Bereiche des Rotorblattlagers, zu stark erhitzen. Insbesondere kann so vermieden werden, dass die Temperatur des Ringelements in einem Bereich der Laufbahn bzw. in einem Befestigungsbereich des Rotorblatts eine kritische Temperatur übersteigt, so dass Beschädigungen an der Laufbahn bzw. dem Rotorblatt verhindert werden können. Die Kühlvorrichtung kann zumindest eine Kühleinrichtung umfassen, welche an dem Ringelement, beispielsweise in einer Bohrung bzw. Durchgangsöffnung des Ringelements, angeordnet werden kann. Vorteilhafterweise kann die Kühlvorrichtung auf Basis einer Wasserkühlung arbeiten. Als Kühleinrichtung kann beispielsweise eine Kupferspirale vorgesehen sein, welche von Wasser durchflossen werden kann.

Erfindungsgemäß erfolgt die Instandhaltung und/oder Instandsetzung in situ. Mit anderen Worten erfolgt die Instandhaltung und/oder Instandsetzung in einem in die Windkraftanlage eingebauten Zustand des Rotorblattlagers. Ein Ausbau des Rotorblattlagers ist somit nicht erforderlich. Vielmehr kann die Instandhaltung bzw. Instandsetzung aus der Rotornabe heraus erfolgen, wobei ein in die Rotornabe eingebrachter Servicetechniker die Verfahrensschritte ausführen kann.

Nach der Instandhaltung bzw. Instandsetzung des Zahns liegt der Zahn in einem Arbeitsbereich der Verzahnung. Das Ringelement wird also nicht derart gedreht, dass der instandgehaltene bzw. instandgesetzte Zahn außerhalb des Arbeitsbereiches liegt. Da die instandgehaltenen bzw. instandgesetzten Zähne robust genug sind, um auch weiter den Arbeitsbereich für eine Rotorblattverstellung auszubilden, ist eine aufwendige und kostenintensive Drehung des Ringelements bei von dem Ringelement gelöstem Rotorblatt nicht erforderlich. Im Ergebnis ermöglicht das erfindungsgemäße Verfahren damit eine vergleichsweise einfache und kostengünstige Instandhaltung bzw. Instandsetzung einer Windkraftanlage.

Zwischen dem Ringelement und dem weiteren Ringelement können Wälzkörper des Rotorblattlagers angeordnet sein. Das Rotorblattlager kann also ein Wälzlager sein. Weiter kann das Ringelement einen Innenring des Rotorblattlagers und ein weiteres Ringelement des Rotorblattlagers einen Außenring des Rotorblattlagers ausbilden, wobei die Verzahnung des Ringelements eine Innenverzahnung des Innenrings ausbilden kann. Alternativ kann das Ringelement einen Außenring des Rotorblattlagers und das weitere Ringelement einen Innenring des Rotorblattlagers ausbilden, wobei die Verzahnung des Ringelements eine Außenverzahnung des Außenrings ausbilden kann. Zwischen dem Innenring und dem Außenring können dann die Wälzkörper des Rotorblattlagers angeordnet sein.

Vorteilhafterweise kann der Zahn durch Auftragschweißen unter einer Aufbringung von einem Schweißzusatzwerkstoff auf ein Grundmaterial des Zahns bzw. einen Grundwerkstoff des Zahns in eine zumindest näherungsweise ursprüngliche geometrische Form gebracht werden. Vorteilhafterweise kann dabei ein Wolfram-Inertgas-Schweißen (WIG-Schweißen) zum Einsatz kommen. Als Schweißzusatzwerkstoff bzw. Auftragwerkstoff kann beispielsweise UTP A 651 vorgesehen sein.

Vorteilhafterweise kann der Zahn vor dem Schweißen vorgewärmt werden, wobei der Zahn nach dem Schweißen abgekühlt werden kann, wobei das Vorwärmen und das Abkühlen derart erfolgen kann, dass eine Martensitbildung in einem Material des Zahns im Wesentlichen vermieden werden kann. Der Begriff "Material des Zahns" bezeichnet sowohl ein, insbesondere ursprüngliches, Grundmaterial des Zahns als auch einen den Zahn nach dem Schweißen ausbildenden oder mitausbildenden Schweißzusatzwerkstoff. Um eine Martensitbildung in einem Material bzw. Gefüge des Zahns im Wesentlichen auszuschließen, kann der Zahn bzw. das Material des Zahns vor dem Schweißen vorgewärmt und nach dem Schweißen abgekühlt werden, wobei eine Vorwärmrate und eine Abkühlrate derart gewählt werden können, dass sich das Gefüge des Zahns nicht in ein martensitisches Gefüge umwandeln kann. Ein Vorhandensein von Martensit in dem Gefüge des Zahns vergrößert eine Gefahr einer Rissbildung in dem Zahn nämlich erheblich, so dass dessen Bildung zu vermeiden ist. Vorteilhafterweise kann das Vorwärmen vergleichsweise schnell und das Abkühlen vergleichsweise langsam erfolgen. Auch kann vorgesehen sein, das Rotorblattlager bzw. das Ringelement während des Vorwärmens und/oder Abkühlens zumindest bereichsweise bzw. in dem Bereich der Umgebung des Zahns unter Verwendung der Kühlvorrichtung zu kühlen. Das Verfahren kann insbesondere auch bei einem aus einem Werkstoff 42CrMo4 ausgebildeten Ringelement bzw. Rotorblattlager eingesetzt werden. Dieser Werkstoff weist an sich keine guten Schweißeigenschaften auf, jedoch ermöglicht die Kombination aus dem Vorwärmen und Abkühlen eine Bearbeitung dieses Werkstoffs durch Schweißen.

Vorteilhafterweise kann das Vorwärmen und das Abkühlen derart erfolgen, dass Fehlstellen in der Schweißung, insbesondere Risse, Bindefehler oder dergleichen, im Wesentlichen vermieden werden. Insbesondere können Bindefehler in einer Übergangszone, in welcher das Grundmaterial an den Schweißzusatzwerkstoff angrenzt, durch eine geeignete Wahl einer Vorwärmrate und Abkühlrate vermieden werden.

Vorteilhafterweise kann das Vorwärmen und/oder das Abkühlen unter Verwendung einer, vorzugsweise induktiven, Heizvorrichtung durchgeführt werden. Zur kontrollierten Abkühlung des Zahns kann der Zahn nach dem Schweißen mittels der Heizvorrichtung erwärmt werden, wobei eine Heizleistung der Heizvorrichtung zur kontrollierten Absenkung einer Temperatur des Zahns sukzessive heruntergeregelt werden kann. Bei dem Vorwärmen kann die Heizvorrichtung mit einer maximalen Heizleistung betrieben werden. Vorteilhafterweise kann die Heizvorrichtung ein mobiles Induktionsgerät sein.

In einer vorteilhaften Ausführungsform des Verfahrens kann das Vorwärmen anhand einer in der Heizvorrichtung gespeicherten Aufheizkurve und/oder das Abkühlen anhand einer in der Heizvorrichtung gespeicherten Abkühlkurve kontrolliert geregelt werden. Dazu kann eine Vorwärmrate bzw. Abkühlrate bzw. die Aufheizkurve und die Abkühlkurve beschreibende Parameter von einem Bediener in die Heizvorrichtung eingegeben werden.

Vorteilhafterweise kann der Zahn bzw. ein Grundmaterial des Zahns auf eine Temperatur von 180°C bis 220°C vorgewärmt werden. Jedoch sind auch niedrigere bzw. höhere Temperaturen denkbar.

Vorteilhafterweise kann eine Temperatur des Rotorblattlagers, insbesondere des Ringelements, während des Vorwärmens und/oder des Schweißens und/oder des Abkühlens zumindest bereichsweise überwacht werden. Dies kann beispielsweise mittels eines Temperatursensors, eines Thermometers oder einer Wärmebildkamera bewerkstelligt werden. Dabei ist es möglich, die Temperatur in einem Bereich des Zahns und/oder in einem Bereich einer Umgebung des Zahns zu überwachen. Auch ist es möglich, die Temperatur des Ringelements in einem Bereich, welcher zur Befestigung eines Rotorblatts bzw. Rotorblattflansches vorgesehen ist, zu überwachen. Insbesondere kann die Temperatur während des Schwei-ßens überwacht werden, um bei einem Erreichen einer kritischen Temperatur entsprechende Maßnahmen einleiten zu können, um eine durch eine Wärmeeinwirkung bedingte Beschädigung des Ringelements bzw. Rotorblattlagers bzw. Rotorblatts zu verhindern.

Das Rotorblatt kann mit einem Rotorblattflansch des Rotorblatts mittels einer Mehrzahl von Befestigungsmitteln des Rotors an dem Ringelement befestigt sein. Die Befestigungsmittel können Befestigungsbolzen sowie Befestigungsmuttern umfassen. Die Befestigungsbolzen können jeweils in Durchgangsöffnungen des Ringelements eingreifen bzw. diese durchgreifen. Weiter können die Befestigungsbolzen ein Gewinde aufweisen, welches in Eingriff mit einem Gewinde der Durchgangsöffnungen gebracht werden kann. Die Durchgangsöffnungen können in Gestalt eines Lochkreises in dem Ringelement bzw. in einem Ringkörper des Ringelements ausgebildet sein.

Vorteilhafterweise kann eine Kühleinrichtung der Kühlvorrichtung in einer Bohrung des Rotorblattlagers, insbesondere des Ringelements, angeordnet werden. Die Bohrung kann insbesondere eine zum Einsetzen eines Befestigungsmittels vorgesehene Durchgangsöffnung des Ringelements sein.

Weiter kann das Rotorblatt mit einem Rotorblattflansch des Rotorblatts mittels einer Mehrzahl von Befestigungsmitteln des Rotors an dem Ringelement befestigt sein, wobei die Befestigungsmittel jeweils in eine Durchgangsöffnung des Ringelements eingesetzt sein können, wobei zumindest ein benachbart dem Zahn in eine Durchgangsöffnung eingesetztes Befestigungselement aus der Durchgangsöffnung entfernt werden kann, wobei eine Kühleinrichtung in der Durchgangsöffnung angeordnet werden kann, wobei das Ringelement in einem Bereich einer Umgebung des Zahns während des Schweißens unter Verwendung der Kühleinrichtung gekühlt werden kann. Beispielsweise kann die Verzahnung vier, einen Arbeitsbereich bildende, verschlissene Zähne aufweisen, welche instandzusetzen sind. Um zu gewährleisten, dass eine Temperatur des Ringelements in dem Bereich der Laufbahn und in dem Befestigungsbereich für das Rotorblatt eine kritische Temperatur nicht überschreitet, kann dann bei jedem der vier Zähne jeweils ein dem Zahn im Wesentlichen gegenüberliegendes Befestigungsmittel aus einer Durchgangsöffnung, in welche das Befestigungsmittel eingesetzt ist, entfernt werden, so dass nachfolgend in jeder der vier freigelegten Durchgangsöffnungen eine Kühleinrichtung, beispielsweise in Gestalt einer Kupferspirale, angeordnet werden kann, um einen Bereich einer Umgebung der durch Schwei-ßen zu bearbeitenden Zähne zu kühlen. An einem Zahn durch Schweißen eingebrachte Wärme kann somit in einem Bereich gegenüberliegend dem Zahn bzw. der Schweißstelle gleichsam direkt wieder entnommen werden, wodurch ein Wärmestau verhindert werden kann. Auch kann die Kühlung schon während des Vorwärmens erfolgen. Nach dem Schweißen bzw. Abkühlen kann das Befestigungsmittel wieder in die Durchgangsöffnung eingesetzt werden.

Vorteilhafterweise kann der Zahn nach dem Schweißen bzw. Abkühlen durch Spanen, insbesondere Schleifen und/oder Fräsen, bearbeitet werden. Somit kann der Zahn insbesondere aus dem näherungsweise ursprünglichen Zustand in einen im Wesentlichen ursprünglichen Zustand des Zahns gebracht werden. Der aufgeschweißte Zahn kann von Hand geschliffen bzw. gefräst werden. Jedoch kann auch eine mobile Schleifmaschine bzw. Fräsmaschine vorgesehen sein, mittels welcher die spanende Bearbeitung automatisch durchgeführt werden kann. Nach der spanenden Bearbeitung kann mittels einer Schablone überprüft werden, ob der instandgehaltene bzw. instandgesetzte Zahn den gewünschten, vorbestimmten Zustand erreicht hat. Auch können Härtemessungen durchgeführt werden, um den Zustand des Zahns zu überprüfen.

Ferner kann eine Gegenverzahnung eines Zahnrads einer Getriebeeinrichtung einer Rotorblattverstellvorrichtung der Rotornabe in einem Arbeitsbereich mit der Verzahnung in Eingriff stehen, wobei zumindest ein infolge einer Wechselwirkung zwischen der Gegenverzahnung und der Verzahnung verschlissener Zahn der Gegenverzahnung vor einer Instandhaltung und/oder Instandsetzung des Zahns innerhalb des Arbeitsbereiches liegen kann, wobei das Zahnrad spätestens nach der Instandhaltung und/oder Instandsetzung des Zahns durch eine Betätigung der Rotorblattverstellvorrichtung derart gedreht werden kann, dass der Zahn der Gegenverzahnung außerhalb des Arbeitsbereiches liegt. Auch die Zähne der Gegenverzahnung des Zahnrads unterliegen infolge einer Wechselwirkung mit den Zähnen der Verzahnung einem fortlaufenden Verschleiß, welcher jedoch regelmäßig geringer ausfällt als bei den Zähnen der Verzahnung. Durch die Drehung des Zahnrads derart, dass in dem Arbeitsbereich der Gegenverzahnung bzw. in einer 0°-Position des Arbeitsbereiches im Wesentlichen noch unverschlissene bzw. nicht beanspruchte Zähne der Gegenverzahnung mit dem instandgehaltenen bzw. instandgesetzten Zahn der Verzahnung in Eingriff gelangen, kann ein erneuter Verschleiß des Zahns der Verzahnung verlangsamt werden. Auch können durch die Drehung Beschädigungen an dem Zahnrad verhindert werden. Die Drehung kann durch eine Betätigung der Rotorblattverstellvorrichtung bzw. einer Antriebeinrichtung der Rotorblattverstellvorrichtung ausgeführt werden, bei welcher das Ringelement bzw. das Rotorblatt um ein ganzzahliges Vielfaches von 360°, beispielsweise dreimal oder viermal um 360°, gedreht werden kann. Das Rotorblatt kann sich dann nach der Drehung wieder in einer 0°-Position befinden, in welcher die noch unverschlissenen Zähne der Gegenverzahnung mit den instandgehaltenen bzw. instandgesetzten Zähnen der Verzahnung in Eingriff gelangen können.

Alternativ kann das Zahnrad auch ausgetauscht werden, insbesondere, wenn Zähne der Gegenverzahnung eine Verschleißgrenze erreicht haben sollten.

Weiter kann auf die Verzahnung und/oder die Gegenverzahnung ein Schmierstoff aufgebracht werden. Insbesondere kann der Schmierstoff auf die instandgehaltenen bzw. instandgesetzten Zähne aufgebracht werden.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung eines aus dem Stand der Technik bekannten Rotorblattlagers;
- **Fig. 2**: eine graphische Darstellung eines Temperaturverlaufs während einer Durchführung des Verfahrens.

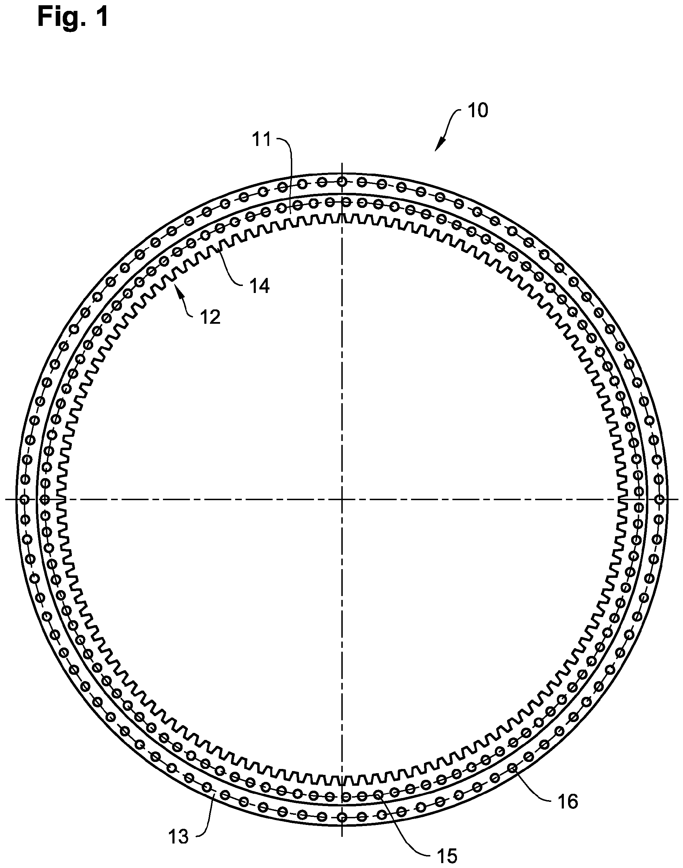

Die **Fig. 1** zeigt eine schematische Darstellung eines aus dem Stand der Technik bekannten, als ein Wälzlager ausgebildeten Rotorblattlagers 10, welches ein Ringelement 11 mit einer Verzahnung 12 und ein weiteres Ringelement 13 umfasst. Zwischen dem Ringelement 11 und dem weiteren Ringelement 13 sind hier nicht gezeigte Wälzkörper des Rotorblattlagers 10 angeordnet. Das Ringelement 11 bildet einen Innenring des Rotorblattlagers 10 aus und das weitere Ringelement 13 bildet einen Au-ßenring des Rotorblattlagers 10 aus, wobei die Verzahnung 12 des Ringelements 11 eine Innenverzahnung des Innenrings ausbildet. Die Verzahnung 12 weist eine Vielzahl von Zähnen 14 auf. Weiter weist das Ringelement 11 eine einen Lochkreis ausbildende Vielzahl von Durchgangsöffnungen 15 und das weitere Ringelement 13 weist eine einen weiteren Lochkreis ausbildende Vielzahl von Durchgangsöffnungen 16 auf.

Mittels hier nicht gezeigter Befestigungsmittel, welche die Durchgangsöffnungen 16 durchgreifen können, kann das Rotorblattlager 10 an einer hier nicht gezeigten Rotornabe derart angeordnet werden, dass das weitere Ringelement 13 bezüglich der Rotornabe fest steht, wobei das Ringelement 11 bezüglich des weiteren Ringelements 13 drehbar ist. Die Durchgangsöffnungen 15 dienen zur Befestigung eines hier nicht gezeigten Rotorblatts, welches mittels weiterer hier nicht gezeigter Befestigungsmittel, welche die Durchgangsöffnungen 15 durchgreifen können, an dem Ringelement 11 befestigt werden kann. Eine Verstellung eines Anstellwinkels des Rotorblatts bezüglich der Rotornabe kann dann durch eine Drehung des Ringelements 11 bezüglich des weiteren Ringelements 13 bzw. der Rotornabe erfolgen.

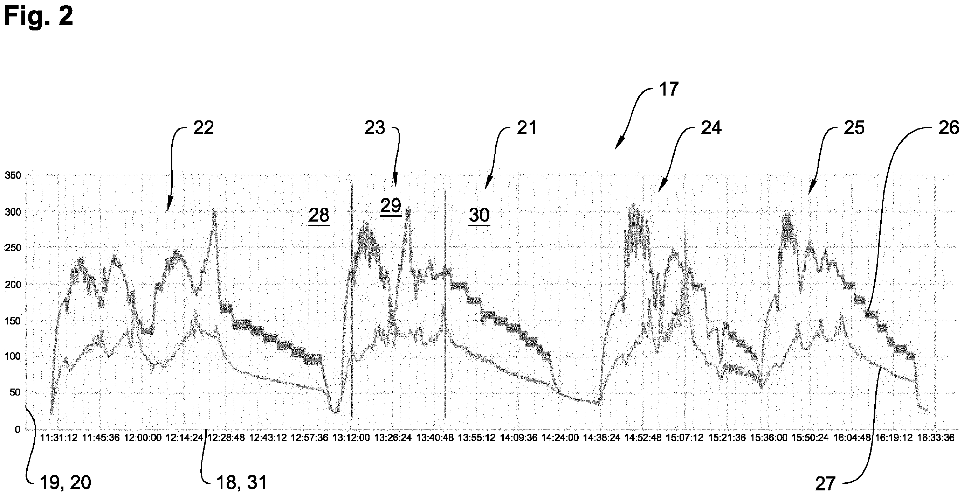

Die **Fig. 2** zeigt ein Temperatur-Zeit-Diagramm 17, wobei auf einer ZeitAchse 18 des Temperatur-Zeit-Diagramms 17 eine Zeit 31 in Form einer Uhrzeit und auf einer Temperatur-Achse 19 des Temperatur-Zeit-Diagramms 17 eine Temperatur 20 in °C aufgetragen ist. Das Temperatur-Zeit-Diagramm 17 zeigt einen Temperaturverlauf 21 bei einer Durchführung einer vorteilhaften Ausführungsform des erfindungsgemäßen Verfahrens, wobei vier benachbarte, verschlissene Zähne einer Verzahnung eines Ringelements eines Rotorblattlagers instandgesetzt werden. Der Temperaturverlauf 21 weist vier Sektionen 22, 23, 24 und 25 auf, wobei jede Sektion 22, 23, 24 und 25 eine Instandsetzung eines der vier Zähne wiederspiegelt. Zudem ist ersichtlich, dass in dem Temperatur-Zeit-Diagramm 17 eine obere Kurve 26 und eine untere Kurve 27 dargestellt sind. Die obere Kurve 26 zeigt den Temperaturverlauf 21 jeweils an einem Zahn gegenüberliegend einer Schweißstelle, während die untere Kurve 27 den Temperaturverlauf 21 jeweils an einer Oberseite des Rotorblattlagers benachbart einem Zahn zeigt. Exemplarisch wird der Temperaturverlauf 21 anhand der Sektion 23 nun näher erläutert, welche die Instandsetzung des zweiten Zahns zeigt. Ersichtlich ist, dass die Sektion 23 drei Bereiche 28, 29 und 30 umfasst. In dem Bereich 28 steigt die Temperatur 20 infolge eines Vorwärmens des Zahns bei einer maximalen Leistung eines dazu verwendeten Induktionsgerätes steil an. In dem Bereich 29 erfolgt eine Bearbeitung des Zahns durch Schweißen, wobei ein Schweißzusatzwerkstoff auf ein Grundmaterial des Zahns aufgebracht wird, bis der Zahn in eine zumindest näherungsweise ursprüngliche geometrische Form des Zahns gebracht ist. Schließlich fällt die Temperatur 20 in dem Bereich 30 infolge eines kontrolliert geregelten Abkühlens des Zahns vergleichsweise langsam ab. Das Vorwärmen und Abkühlen des Zahns erfolgen derart, dass eine Martensitbildung in einem Gefüge des Zahns sowie Fehlstellen in der Schweißung im Wesentlichen vermieden werden. Insbesondere während des Schweißens wird das Ringelement in einem Bereich einer Umgebung der Zähne unter Verwendung einer Kühlvorrichtung gekühlt, wodurch mögliche Beschädigungen an dem Rotorblattlager, insbesondere an gehärteten Laufflächen des Rotorblattlagers, und an einem an dem Ringelement befestigten Rotorblatt vermieden werden. Dazu wird bei jedem der vier Zähne jeweils ein dem Zahn im Wesentlichen gegenüberliegendes, zur Befestigung des Rotorblatts an dem Ringelement vorgesehenes Befestigungsmittel aus einer Durchgangsöffnung des Ringelements, in welche das Befestigungsmittel jeweils eingesetzt ist, entfernt, so dass nachfolgend in jeder der vier freigelegten Durchgangsöffnungen eine Kühleinrichtung der Kühlvorrichtung, beispielsweise in Gestalt einer Kupferspirale, angeordnet werden kann, um einen Bereich einer Umgebung der durch Schweißen zu bearbeitenden Zähne zu kühlen. Dabei erfolgt die Instandhaltung bzw. Instandsetzung in situ aus einer das Rotorblattlager aufweisenden Rotornabe.

## Patentansprüche

1. Verfahren zur Instandhaltung und/oder Instandsetzung einer Windkraftanlage, wobei ein Rotor der Windkraftanlage mit einer ein Rotorblattlager (10) aufweisenden Rotornabe auf einem Turm der Windkraftanlage angeordnet ist, wobei ein Ringelement (11) des Rotorblattlagers bezüglich eines bezüglich der Rotornabe fest stehenden weiteren Ringelements (13) des Rotorblattlagers drehbar ist, wobei ein Rotorblatt des Rotors an dem Ringelement befestigt ist, wobei ein Anstellwinkel des Rotorblatts bezüglich der Rotornabe durch eine Drehung des Ringelements verstellbar ist,
**dadurch gekennzeichnet,**
**dass** zumindest ein verschlissener Zahn (14) einer Verzahnung (12) des Ringelements durch Schweißen bearbeitet wird, bis der Zahn in einen vorbestimmten, vorzugsweise zumindest näherungsweise ursprünglichen, Zustand des Zahns gebracht ist, wobei das Rotorblattlager zumindest bereichsweise, insbesondere das Ringelement in einem Bereich einer Umgebung des Zahns, während des Schweißens unter Verwendung einer Kühlvorrichtung gekühlt wird, wobei die Instandhaltung und/oder Instandsetzung in situ erfolgt.

2. Verfahren nach Anspruch 1,
**dadurch gekennzeichnet,**
**dass** der Zahn (14) durch Auftragschweißen unter einer Aufbringung von einem Schweißzusatzwerkstoff auf ein Grundmaterial des Zahns in eine zumindest näherungsweise ursprüngliche geometrische Form gebracht wird.

3. Verfahren nach Anspruch 1 oder 2,
**dadurch gekennzeichnet,**
**dass** der Zahn vor dem Schweißen vorgewärmt wird, wobei der Zahn nach dem Schweißen abgekühlt wird, wobei das Vorwärmen und das Abkühlen derart erfolgt, dass eine Martensitbildung in einem Material des Zahns im Wesentlichen vermieden wird.

4. Verfahren nach Anspruch 3,
**dadurch gekennzeichnet,**
**dass** das Vorwärmen und das Abkühlen derart erfolgt, dass Fehlstellen in der Schweißung, insbesondere Risse, Bindefehler oder dergleichen, im Wesentlichen vermieden werden.

5. Verfahren nach Anspruch 3 oder 4,
**dadurch gekennzeichnet,**
**dass** das Vorwärmen und/oder das Abkühlen unter Verwendung einer, vorzugsweise induktiven, Heizvorrichtung durchgeführt wird.

6. Verfahren nach Anspruch 5,
**dadurch gekennzeichnet,**
**dass** das Vorwärmen anhand einer in der Heizvorrichtung gespeicherten Aufheizkurve und/oder das Abkühlen anhand einer in der Heizvorrichtung gespeicherten Abkühlkurve kontrolliert geregelt wird.

7. Verfahren nach einem der Ansprüche 3 bis 6,
**dadurch gekennzeichnet,**
**dass** der Zahn (14) auf eine Temperatur (20) von 180 °C bis 220 °C vorgewärmt wird.

8. Verfahren nach einem der Ansprüche 3 bis 7,
**dadurch gekennzeichnet,**
**dass** eine Temperatur (20) des Rotorblattlagers (10), insbesondere des Ringelements (11), während des Vorwärmens und/oder des Abkühlens zumindest bereichsweise überwacht wird.

9. Verfahren nach einem der vorangehenden Ansprüche,
**dadurch gekennzeichnet,**
**dass** eine Temperatur (20) des Rotorblattlagers (10), insbesondere des Ringelements (11), während des Schweißens zumindest bereichsweise überwacht wird.

10. Verfahren nach einem der vorangehenden Ansprüche,
**dadurch gekennzeichnet,**
**dass** das Rotorblatt mit einem Rotorblattflansch des Rotorblatts mittels einer Mehrzahl von Befestigungsmitteln des Rotors an dem Ringelement befestigt ist, wobei die Befestigungsmittel jeweils in eine Durchgangsöffnung (15) des Ringelements (11) eingesetzt sind, wobei zumindest ein benachbart dem Zahn (14) in eine Durchgangsöffnung eingesetztes Befestigungsmittel aus der Durchgangsöffnung entfernt wird, wobei eine Kühleinrichtung der Kühlvorrichtung in der Durchgangsöffnung angeordnet wird, wobei das Ringelement in einem Bereich einer Umgebung des Zahns während des Schweißens unter Verwendung der Kühleinrichtung gekühlt wird.

11. Verfahren nach einem der vorangehenden Ansprüche,
**dadurch gekennzeichnet,**
**dass** der Zahn (14) nach dem Schweißen durch Spanen, insbesondere Schleifen und/oder Fräsen, bearbeitet wird.

12. Verfahren nach einem der vorangehenden Ansprüche,
**dadurch gekennzeichnet,**
**dass** eine Gegenverzahnung eines Zahnrads einer Getriebeeinrichtung einer Rotorblattverstellvorrichtung der Rotornabe in einem Arbeitsbereich mit der Verzahnung (12) in Eingriff steht, wobei zumindest ein infolge einer Wechselwirkung zwischen der Gegenverzahnung und der Verzahnung verschlissener Zahn der Gegenverzahnung vor einer Instandhaltung und/oder Instandsetzung des Zahns innerhalb des Arbeitsbereiches liegt, wobei das Zahnrad spätestens nach der Instandhaltung und/oder Instandsetzung des Zahns durch eine Betätigung der Rotorblattverstellvorrichtung derart gedreht wird, dass der Zahn der Gegenverzahnung außerhalb des Arbeitsbereiches liegt.
